**Europäisches Patentamt**

**European Patent Office**

**Office européen des brevets**

(19)

(11) Veröffentlichungsnummer : **0 278 420 B1**

# EUROPÄISCHE PATENTSCHRIFT

(12)

(45) Veröffentlichungstag der Patentschrift :
05.06.91 Patentblatt 91/23

(51) Int. Cl.$^5$ : **F16L 37/28, F16L 37/22**

(21) Anmeldenummer : **88101681.0**

(22) Anmeldetag : **05.02.88**

(54) Schnellverschlusskupplung für insbesondere Hydraulikleitungen.

(30) Priorität : **11.02.87 DE 3704159**

(43) Veröffentlichungstag der Anmeldung :
**17.08.88 Patentblatt 88/33**

(45) Bekanntmachung des Hinweises auf die
Patenterteilung :
**05.06.91 Patentblatt 91/23**

(84) Benannte Vertragsstaaten :
**BE CH ES FR GB IT LI NL SE**

(56) Entgegenhaltungen :
**EP-A- 150 236
US-A- 2 773 706
US-A- 2 836 207
US-A- 4 347 870**

(73) Patentinhaber : **Aeroquip GmbH
Ruhrstrasse 11
W-7570 Baden-Baden (DE)**

(72) Erfinder : **Steuerwald, Alfred
Kirchheim-Bolandener Strasse 4
W-6719 Orbis (DE)**
Erfinder : **Class, Wolfgang
Am Weiher 8
W-6509 Gau-Heppenheim (DE)**

(74) Vertreter : **Patentanwälte Dipl.-Ing. Rudolf
Bibrach Dipl.-Ing. Elmar Rehberg
Postfach 1453 Pütterweg 6
W-3400 Göttingen (DE)**

**Beschreibung**

Die Erfindung geht aus von einer Schnellverschlußkupplung für insbesondere Hydraulikleitungen, bestehend aus zwei ineinandersteckbaren und in der gekuppelten Stellung über eine Sperrkugelverriegelung mit axial verschiebbarer Schiebehülse verriegelbaren Kupplungshälften in Form einer die Schiebehülse tragenden Muffe und eines Steckers, mit einem Muffenventil und einem Steckerventil, deren jeweiliger Ventilkörper durch eine Schließfeder in Schließrichtung beaufschlagt ist und mit einer im Gehäuse der Muffe gelagerten, über einen Handhebel verdrehbaren Exzenterwelle, die eine erste Steuerfläche zur zwangsweisen Betätigung der Sperrkugelverriegelung aus einer anfänglichen Freigabestellung heraus in eine Verriegelungsstellung hinein aufweist. Derartige Schnellverschlußkupplungen werden insbesondere in der Landmaschinenindustrie eingesetzt, wenn landwirtschaftliche Geräte angetrieben werden.

Eine derartige Schnellverschlußkupplung ist aus der US-A-4 540 021 bekannt. Die Exzenterwelle ist mit ihrer Drehachse rechtwinklig zur Achse der Schnellverschlußkupplung in dem Gehäuse der Muffe verdrehbar gelagert und trägt außen einen Handhebel, um die Exzenterwelle bei der Durchführung des Kupplungsvorgangs zu drehen. Ein exzentrisch an der Exzenterwelle vorgesehener Nocken greift in einen Innenkörper der Muffe ein, der unter Abdichtwirkung verschiebbar im Gehäuse der Muffe gelagert ist und gleichzeitig einen Käfig für die Kugeln einer Sperrkugelverriegelung bildet. Damit wird der Innenkörper relativ zu der Schiebehülse zwangsgesteuert und es ist möglich, die Sperrkugelverriegelung aus einer anfänglichen Freigabestellung heraus in eine Verriegelungsstellung hinein zu überführen, was während des Einkuppelvorgangs stattfindet. Analoges gilt für den Vorgang des Auskuppelns. Die bekannte Schnellverschlußkupplung weist im Bereich der Muffe ein erstes Muffenventil auf, welches einen Ventilkörper besitzt, der unter Zwischenschaltung einer Feder auf einem Sternkörper im Gehäuse der Muffe abgestützt ist. Dieses Muffenventil ist in einiger Entfernung von dem vorderen Ende der Muffe nach rückwärts versetzt im Innern des Gehäuses angeordnet. Zusätzlich ist gleichsam im vorderen Endbereich der Muffe noch ein zweites Muffenventil untergebracht, welches aus mehreren Einzelteilen besteht, die darüberhinaus eine Steuereinrichtung bzw. eine Übertragungseinrichtung bilden. Durch die fortgesetzte Betätigung des Handhebels ist es möglich, nach Verriegelung der Sperrkugelverriegelung über den Ventilkörper des Steckerventils und die Steuereinrichtung letztlich auch ein Öffnen des Muffenventils zu erreichen. Dieser Öffnungsvorgang ist jedoch nur dann möglich, wenn der Stecker unter Druck steht. In Verbindung mit dem verschiebbaren Innenkörper ist noch eine Ausgleichskammer gebildet, deren Volumenveränderung ebenfalls zwangsgesteuert ist. Diese bekannte Schnellverschlußkupplung ist vorteilhaft kuppelbar, und zwar unabhängig davon, ob in der Muffe und/oder im Stecker ein Druck eingeschlossen ist. Die Kupplung ist auch abreißfähig, wenn die erste Steuerfläche des Nockens der Exzenterwelle so angeordnet ist, daß in der gekuppelten Stellung eine Totpunktslage vermieden wird. Bei Rückströmungen in der gekuppelten Kupplung besteht nicht die Gefahr des Zuschlagens des Ventils des Steckers, was durch eine kraftmäßige Beaufschlagung des Ventilkörpers des Steckers gegen einen Anschlag und durch eine besondere geometrische Gestaltung des Sternkörpers des Steckers erreicht wird. Die Schnellverschlußkupplung ist unter Überwindung geringer Kräfte kuppelbar. Nachteilig an dieser Schnellverschlußkupplung ist jedoch, daß durch den Zurückversatz des Ventilkörpers der Muffe vom freien.

Ende der Muffe weg und bedingt durch die Anordnung der Steuereinrichtung bzw. Übertragungseinrichtung ein relativ großer Raum zwischen dem ersten Muffenventil und der dem Stecker zugekehrten Stirnfläche der Muffe entsteht, der in entkuppeltem Zustand nach außen nicht abgedichtet ist, so daß eine relativ große Leckölrate entsteht, die aber andererseits für die Durchführbarkeit des Kupplungsvorgangs zwingend erforderlich ist. Beim Kupplungsvorgang muß nämlich dieser Zwischenraum zusammengeschoben werden, was nur möglich ist, wenn er zumindest teilweise mit Luft und nicht etwa vollständig mit Flüssigkeit gefüllt ist. Wenn der Stecker unter einem eingeschlossenen Druck steht, ist das Öffnen des Steckerventils nach erfolgtem Kupplungsvorgang nur dann möglich,wenn muffenseitig eine Druckerhöhung stattfindet, die üblicherweise durch das Einschalten einer Druckquelle bzw. einer Pumpe erreicht wird. Steht der Stecker dagegen nicht unter einem eingeschlossenen Druck, so ist zu erwarten, daß das Steckerventil zu ganz verschiedenen Zeiten relativ zum Kupplungsvorgang öffnet, abhängig von den Federkräften und den Kräften der u. U. verschiedenen Drücke auf der Muffenseite.

Aus der US-A-4 347 870 ist eine Schnellverschlußkupplung für insbesondere Hydraulikleitungen bekannt, die zwei ineinandersteckbare und in der gekuppelten Stellung über eine Sperrkugelverriegelung mit axial verschiebbarer Schiebehülse verriegelbare Kupplungshälften in Form einer Muffe und eines Steckers aufweist. In der Muffe ist ein Muffenventil und im Stecker ein Steckerventil gebildet, wobei deren jeweilige Ventilkörper durch je eine Schließfeder in Schließrichtung beaufschlagt sind. Die Sperrkugelverriegelung wird abgesehen von einer gegebenen Abreißfunktion manuell betätigt, indem die auf der Muffe verschiebbare Schiebehülse aus einer anfänglichen Verriegelungsstellung in eine Freigabestellung überführt wird. Nach dem Einstecken des Steckers und dem Loslassen der Schiebehülse führt eine Verriegelungsfeder die Schiebehülse wieder in ihre Verriegelungsstellung. Unabhängig von der Betätigung der Sperrkugelverriegelung ist das Gehäuse der Muffe von einer über einen Handhebel verdrehbaren Exzenterwelle durchsetzt, die zwei Steuerflächen aufweist, welche mit einer im Muffenventil gelagerten Ventileinrichtung zusammenwirken. Eine der Steuerflächen ist zur zwangsweisen Betätigung und Blockierung der axialen Beweglichkeit des Ventilkörpers des Muffenventils in der Offenstellung bestimmt und arbeitet mit einer entsprechenden Gegenfläche an dem Ventilkörper des Muffenventils zusammen. Die andere Steuerfläche ist zur zwangsweisen Betätigung und Blockierung der axialen Beweglichkeit des Ventilkörpers des Steckerventils in der Offenstellung bestimmt und arbeitet mit einer Gegenfläche an einem Druckstift zusammen, der im Ventilkörper des Muffenventils dichtend und gleitend gelagert ist. Das Muffenventil ist als einziges Absperrventil für die Muffe im vorderen Endbereich der Muffe und die Exzenterwelle auf der dem vorderen Endbereich der Muffe abgekehrten Seite des Ventilkörpers angeordnet. Diese bekannte Schnellverschlußkupplung gestattet zwar das gleichzeitige Öffnen bzw. des Schließen des Muffenventils und des Steckerventils in der gekuppelten Stellung, die durch die Sperrkugelverriegelung gesichert ist. Die Betätigung der Sperrkugelverriegelung selbst geschieht jedoch manuell und unabhängig von dem Öffnen und Schließen des Muffenventils und des Steckerventils. Damit ist die Gefahr verbunden, daß bei einem manuellen Lösen der Sperrkugelverriegelung ohne vorheriges Schließen des Muffenventils und des Steckerventils Muffe und Stecker voneinander entkuppelt werden können, wobei zwar das Steckerventil schließt, jedoch das Muffenventil offenbleibt. Lediglich im Abrißfall betätigt die Schiebehülse infolge eindeutiger, in ihrer Richtung festgelegter Bewegungen die Exzenterwelle und führt diese in die Ausgangsstellung zurück, so daß auch das Muffenventil schließt.

Aus der US-A-3 680 591 ist eine weitere Schnellverschlußkupplung bekannt, die ebenfalls über einen Handhebel und eine von diesem verdrehbare Exzenterwelle verfügt. In dem Gehäuse der Muffe ist ein erstes und ein zweites Muffenventil in Reihe hintereinander vorgesehen, wobei auch hier das erste Muffenventil in einiger Entfernung rückversetzt zu dem vorderen Ende der Muffe angeordnet ist und gleichsam weiter zurückversetzt angeordnet ist als die Exzenterwelle. Zwischen dem zweiten Muffenventil und der Exzenterwelle ist wiederum eine Steuereinrichtung bzw. eine Übertragungseinrichtung angeordnet, deren rückwärtiges Ende mit der Exzenterwelle zusammenarbeitet. Völlig unabhängig von dem Handhebel und der Exzenterwelle ist auch hier eine Sperrkugelverriegelung mit einer verschiebbaren Schiebehülse vorgesehen, so daß eine unabhängige Betätigung der Sperrkugelverriegelung möglich ist. Bei entsprechender Verdrehung des Handhebels und der Exzenterwelle werden die Ventilkörper des Muffenventils und des Steckerventils in der Offenstellung nach Vollendung des Kupplungsvorgangs blockiert, so daß auf diese Art und Weise eine Rückströmsicherung erreichbar ist. Vorteilhaft gestattet diese Schnellverschlußkupplung eine reproduzierbare und verläßliche Betätigung der Ventilkörper des Muffenventils und des Steckerventils aus den Schließstellungen heraus in die jeweilige Offenstellung. Darüberhinaus findet die Blockierung der Ventilkörper in dieser Offenstellung statt, so daß die Rückströmsicherung realisiert ist. Nachteilig ist hier jedoch, daß auch hier eine Steuer- bzw. Übertragungseinrichtung im vorderen Endbereich der Muffe vorgesehen ist. Weiterhin hat eine Verdrehung der Exzenterwelle keinerlei Einfluß auf eine Betätigung der Sperrkugelverriegelung, so daß auch in der gekuppelten Stellung die Gefahr besteht, durch eine ungewollte Betätigung der Schiebehülse einen ungewollten Entkupplungsvorgang einzuleiten. Weiterhin ist nachteilig, daß beim Kuppeln eines unter Druck stehenden Steckers ein Druckraum im vorderen Endbereich der Muffe um die Steuer- und Übertragungseinrichtung herum zusammengeschoben werden muß. Dieser Druckraum ist bei Verwendung in Verbindung mit einer Hydraulikleitung mit nicht komprimierbarem Medium gefüllt, so daß das Entspannen dieses Druckraums mit nachfolgendem Öffnen des zweiten Muffenventils nur dann möglich ist, wenn durch eine gesonderte Verdrehung der Exzenterwelle in eine Lösestellung der Druckraum über eine sich dann ergebende Leitungsverbindung an die Atmosphäre angeschlossen wird. Im Fall eines hydraulischen Mediums wird also zum Zwecke dieser Entspannung zwangsläufig Hydraulikflüssigkeit in die Atmosphäre abgegeben, damit der Kupplungsvorgang ermöglicht wird.

Um den zuletzt beschriebenen Nachteil zu beseitigen, ist es aus der US-A-4 009 729 bekannt, den Druckraum über einen Entspannungskolben expandieren zu lassen, der mit entsprechenden Steuerflächen auf der Exzenterwelle zusammenarbeitet. Durch die entsprechende Verdrehung der Exzenterwelle wird es möglich, daß der Entspannungskolben sich axial bewegt, um den eingeschlossenen Druck im Druckraum zu reduzieren. Damit wird vorteilhaft die Abgabe von Lecköl in die Atmosphäre vermieden. Nachteilig verbleibt aber auch hier, daß die Sperrkugelverriegelung nicht über die Exzenterwelle gesteuert wird, also keine zwangsläufige Betätigung der Sperrkugelverriegelung stattfindet. Außerdem ist die Steuer- und Übertragungseinrichtung am vorderen Ende der Muffe auch hier erforderlich und zudem vergleichsweise aufwendig ausgebildet.

Der Erfindung liegt die Aufgabe zugrunde, ausgehend von einer Schnellverschlußkupplung, bei der die Sperrkugelverriegelung über eine Exzenterwelle betätigt wird, eine solche Kupplung zu schaffen, bei der darüberhinaus innerhalb des Einkuppelvorgangs – also unabhängig von der Betätigung einer muffenseitigen Druckmittelquelle – auch ein definiertes, reproduzierbares Öffnen des Muffenventils und des Steckerventils in sinnvoller Reihenfolge und Zusammenwirkung erfolgt, unabhängig von Kräften in der Muffe und/oder dem Stecker – also von Federkräften, von eingeschlossenen Restdrücken in Muffen und-/oder Stecker – . Außerdem sollen die Ventilkörper von Muffenventil und Steckerventil andererseits am Ende des Kupplungsvorgangs in der Offenstellung mechanisch verriegelt sein, und zwar unabhängig von der Betätigung einer muffenseitigen Druckmittelquelle.

Erfindungsgemäß wird dies in einer ersten Lösung dadurch erreicht, daß die Muffe an der Exzenterwelle eine zweite Steuerfläche zur zwangsweisen Betätigung und Blockierung der axialen Beweglichkeit des Ventilkörpers des Muffenventils in der Offenstellung sowie eine dritte Steuerfläche zur zwangsweisen Betätigung und Blockierung der axialen Beweglichkeit des Ventilkörpers des Steckerventils in der Offenstellung aufweist, und daß das Muffenventil als einziges Absperrventil für die Muffe im vorderen Endbereich der Muffe und die Exzenterwelle auf der dem vorderen Endbereich der Muffe abgekehrten Seite des Ventilkörpers angeordnet sind.

Die neue Schnellverschlußkupplung gestattet über einen einzigen Handhebel eine zwangsweise Betätigung der Sperrkugelverriegelung einerseits und der Ventilkörper des Steckerventils und des Muffenventils andererseits in sinnvoller Reihenfolge und Zusammenwirkung. Diese Betätigung findet nicht nur unabhängig von sonstigen an Muffen und Stecker einwirkenden Kräften statt, sondern es ergibt sich aufgrund der erfinderischen Merkmale auch noch die Realisierung einer Blockierung der Ventilkörper des Muffenventils und des Steckerventils in der Offenstellung und die damit eintretende Rückströmsicherung. Die neue Schnellverschlußkupplung weist gegenüber der Kupplung nach dem gattungsbildenden Stand der Technik eine besonders geringe Lecköhlrate auf, weil in überraschender Weise durch die andersartige Anordnung zwischen dem Muffenventil einerseits und der Exzenterwelle andererseits nicht nur die Steuer- und Übertragungseinrichtung aus dem Stand der Technik in Fortfall kommt, sondern zugleich die Möglichkeit geschaffen wird, einen im Stand der Technik unumgänglich vorhandenen, relativ großvolumigen Druckraum sehr klein zu gestalten. Weiterhin ist für den Fachmann überraschend, daß es bei der neuen Schnellverschlußkupplung nicht mehr erforderlich ist, im Gehäuse der Muffe einen gesonderten verschiebbaren Innenkörper vorzusehen. Vielmehr ist es ohne Weiteres möglich, daß das Gehäuse des Muffenventils zugleich den Ventilsitz des Muffenventils in seinem vorderen Endbereich bildet. Schließlich bietet die neue Schnellverschlußkupplung noch den weiteren Vorteil, daß das Einschieben des Steckers, unabhängig, ob er unter Druck steht oder nicht, gegen keine nennenswerte Gegenkraft erfolgt. Die Schnellverschlußkupplung läßt sich also leicht und mühelos kuppeln, und zwar durch Einführen des Steckers und durch eine nachfolgende Handbetätigung der Exzenterwelle über den Handhebel. Zur Erwähnung steht weiterhin noch an, daß die neue Kupplung auch dann kuppelbar ist, wenn muffenseitig ein eingeschlossener Druck einwirkt; eine vorherige Druckentlastung eines Druckraums auf seiten der Muffe ist nicht mehr erforderlich.

Die dritte Steuerfläche kann relativ zur zweiten Steuerfläche so ausgebildet und angeordnet sein, daß bei Betätigung der Ventilkörper des Steckerventils mit Voreilung gegenüber dem Ventilkörper des Muffenventils öffnet. Bei unter Druck stehendem Stecker führt die voreilende Öffnung des Steckerventils dazu, daß von der Steckerseite in Richtung auf die Muffe Druckmittel überströmt, wodurch das Öffnen des Ventilkörpers der Muffe erleichtert wird. Auch eine umgekehrte Reihenfolge des Öffnungsvorgangs ist möglich, also ein Nacheilen des Öffnen des Steckerventils. Da in den meisten Fällen jedoch davon ausgegangen werden kann, daß steckerseitig ein Druck bzw. Restdruck eingeschlossen ist, wird einer Voreilung, wie beschrieben, grundsätzlich der Vorzug gegeben.

Zum Öffnen des Steckerventils unter Anwendung einer geringen Betätigungskraft kann die dritte Steuerfläche einen vorstehenden Nocken aufweisen, der in kleinem Abstand zu der Drehachse der Exzenterwelle angeordnet ist. Durch diese Maßnahme wird eine erhebliche Kraftübersetzung erreicht, so daß bei einer vergleichsweise geringen Betätigungskraft am Handhebel eine erhebliche Öffnungskraft auf den Ventilkörper des Steckerventils übertragen werden kann, der durchaus erforderlich werden kann, um den Öffnungsvorgang gegenüber einem eventuell hohen eingeschlossenen Restdruck zu ermöglichen. In ähnlicher bzw. analoger Weise ist es natürlich auch möglich, die zweite Steuerfläche zur Betätigung des Ventilkörpers des Muffenventils mit einem solchen vorstehenden Nocken in diesem Sinne auszurüsten. Die zweite und die dritte Steuerfläche sind in aller Regel voneinander getrennte, unabhängige Steuerflächen, die mit entsprechenden Gegenflächen an den Ventilkörpern oder Übertragungsgliedern zusammenarbeiten. Dabei ist die Kraftübertragung von vornherein so, daß das eine Ventil, beispielsweise das Muffenventil, durch eine Zugkraft betätigt wird, während das andere Ventil, also z.B. das Steckerventil, durch eine Druckkraft betätigt wird.

Der Ventilkörper des Muffenventil kann axial geschlitzt oder radial gebohrt ausgebildet und von der Exzenterwelle durchsetzt sein, wobei der Ventilkörper des Muffenventils eine mit der zweiten Steuerfläche zusammenwirkende zweite Gegenfläche zur ziehenden Betätigung des Ventilkörpers des Muffenventils aufweist. Dies ergibt herstellungstechnisch eine besonders einfache Ausführungsform.

In dem hohl ausgebildeten Ventilkörper des Muffenventils kann ein Druckstift unter Abdichtwirkung verschiebbar gelagert sein, der zur Übertragung einer Druckkraft auf den Ventilkörper des Steckerventils ausgebildet ist und an seinem der Exzenterwelle zugekehrten Ende eine mit der dritten Steuerfläche zusammenwirkende dritte Gegenfläche aufweist. Die inneren Einzelteile der Muffe gestalten sich dabei einfach. Es ist sogar möglich, zwischen dem Ventilkörper des Muffenventils und dem Druckstift die Schließfeder des Muffenventils anzuordnen, so daß diese Schließfeder nicht nur die Schließfunktion des Muffenventils erfüllt, sondern gleichzeitig dafür Sorge trägt, daß der Druckstift mit seiner dritten Gegenfläche auch immer in Anlage an der dritten Steuerfläche der Exzenterwelle gehalten wird.

Die drei Steuerflächen auf der Exzenterwelle sind über einen Drehwinkelbereich so versetzt gegeneinander angeordnet, daß bei einer Verdrehung der Exzenterwelle aus der Freigabestellung in die Verriegelungsstellung in einem ersten Verdrehbereich zunächst nur die Sperrkugelverriegelung verriegelt und in einem weiteren Verdrehbereich der Ventilkörper des Steckerventils und der Ventilkörper des Muffenventils geöffnet und blockiert werden. Dies kann, wie beschrieben, insbesondere mit Voreilung oder aber auch mit Nacheilung geschehen. Zweckmäßig wird jedoch erst die Verriegelungsstellung der Sperrkugelverriegelung erreicht, bevor ein Öffnen der Ventilkörper des Steckerventils und des Muffenventils eingesteuert wird.

Eine zweite Lösung der Aufgabe sieht erfindungsgemäß vor, daß die Muffe an der Schiebehülse eine zweite Steuerfläche zur zwangsweisen Betätigung und Blockierung der axialen Beweglichkeit des Ventilkörpers des Muffenventils in der Offenstellung sowie eine dritte Steuerfläche zur zwangsweise Betätigung und Blockierung der axialen Beweglichkeit des Ventilkörpers des Steckerventils in der Offenstellung aufweist, und daß am Gehäuse der Muffe radial bewegbare Kugeln vorgesehen sind, die mit einer zweiten Gegenfläche zur ziehenden Betätigung des Ventilkörpers des Muffenventils und einer dritten Gegenfläche zum Verschieben eines den Ventilkörper des Steckerventils öffnenden Druckstifts zusammenwirken. Bei dieser Lösung sind also die zweite und dritte Steuerfläche nicht mehr an der Exzenterwelle unmittelbar angeordnet, sondern es wird über die erste Steuerfläche an der Exzenterwelle mit Hilfe der Schiebehülse eine Bewegung abgegriffen bzw. so umgeformt, daß letztlich die Ventilkörper des Steckerventils und des Muffenventils in gegenläufigen Wirkrichtungen betätigt werden können.

Wenn für die selbsttätige Rückführung der Exzenterwelle in die Freigabestellung am Ende des Einkuppelvorgangs eine Feder, insbesondere Drehfeder, vorgesehen ist, und die Schiebehülse ohne Verriegelungsfeder unter Selbsthemmung an der Muffe gelagert ist, ergibt sich vorteilhaft die Realisierung einer Abreißfunktion, d.h. ein Stecker kann aus der gekuppelten Stellung heraus aus dem Gehäuse der Muffe unter Überführung der Sperrkugelverriegelung in die Freigabestellung herausgezogen werden, wobei nachfolgend sowohl das Steckerventil als auch das Muffenventil schließen. Dabei sind die geometrischen Verhältnisse vorteilhaft so eingerichtet, daß bei einem Abriß zuerst das Steckerventil und das Muffenventil schließen und erst nachfolgend die Sperrkugelverriegelung aus der Verriegelungsstellung in die Freigabestellung überführt wird.

Die Schiebehülse kann mit einer ihre Verschiebbarkeit blockierenden Sicherung versehen sein, die erst beim Einführen des Steckers aufgehoben wird. Die Sicherung läßt sich durch einen gegen Federkraft radial verschiebbaren Sperrstift beispielsweise realisieren, der zwischen das Gehäuse der Muffe und die Schiebehülse eingeschaltet ist und beim Einführen des Steckers so radial verschoben wird, daß er seine Blockierstellung verläßt und eine Relativbewegung zwischen Schiebehülse und Gehäuse der Muffe zuläßt. Damit ist sichergestellt, daß in entkuppeltem Zustand ein Verschwenken des Handhebels und der Exzenterwelle nicht möglich ist, wenn kein Stecker in die Muffe eingeschoben ist. Es wird somit vermieden, daß in der abgekuppelten Stellung durch eine Fehlbedienung des Handhebels ein Ausströmen von Hydraulikmedium stattfinden kann.

Ausführungsbeispiele der Erfindung sind in den Zeichnungen dargestellt und werden wie folgt beschrieben. Es zeigen :

Figur 1 die Darstellung der Schnellverschlußkupplung in einer ersten Ausführungsform, mit eingeschobenem Stecker vor Betätigung des Handhebels,

Figur 2 die Schnellverschlußkupplung gemäß Figur 1 nach Verdrehung des Handhebels um etwa 60° mit geschlossener Sperrkugelverriegelung,

Figur 3 die Schnellverschlußkupplung gemäß den Figuren 1 und 2 in komplett angekuppelter Stellung mit geöffnetem Durchgang,

Figur 4 eine schematische Darstellung der verschiedenen Drehwinkelbereiche des Handhebels,

Figur 5 die Detaildarstellung einer Sicherung für die axiale Verschiebbarkeit der Schiebehülse,

Figur 6 eine Draufsicht auf eine Nutgestaltung im Bereich der Sicherung gemäß Figur 5,

Figur 7 eine Seitenansicht der Exzenterwelle,

Figur 8 einen Schnitt durch die Exzenterwelle gemäß der Linie VIII-VIII in Figur 7,

Figur 9 einen Schnitt durch die Exzenterwelle gemäß der Linie IX-IX in Figur 7,

Figur 10 einen Schnitt gemäß der Linie X-X durch die Exzenterwelle in Figur 7,

Figur 11 eine Einzeldarstellung des Ventilkörpers der Schnellverschlußkupplung gemäß den Figuren 1 bis 3 in einem Zwischenschritt seiner Herstellung und

Figur 12 die Schnellverschlußkupplung in einer zweiten Ausführungsform in zwei Halbschnitten gemäß zwei verschiedenen Stellungen.

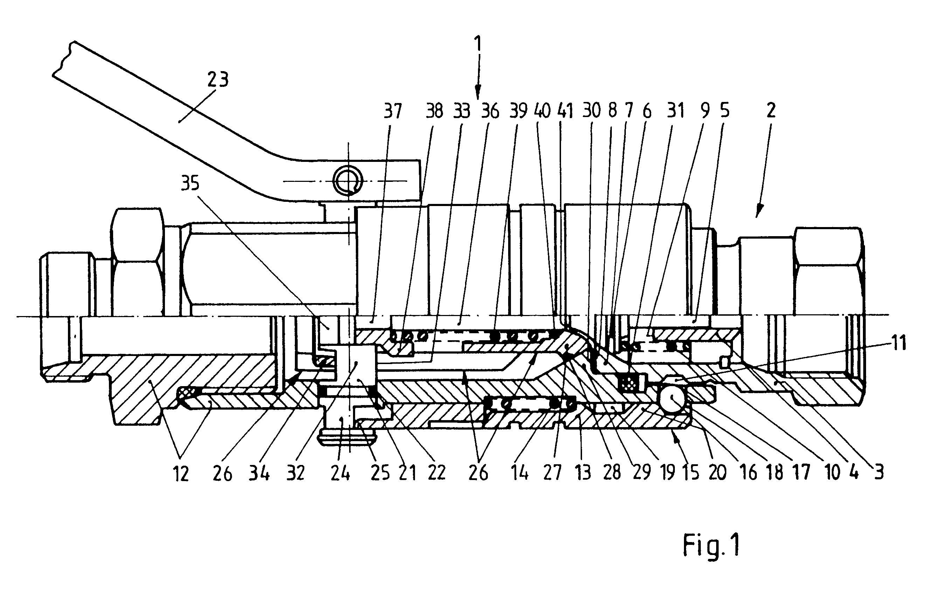

Die in Figur 1 dargestellte Schnellverschlußkupplung besteht wie üblich aus einer Muffe 1 und einem Stecker 2. Der Stecker 2 ist in bekannter Weise aufgebaut. In einem Gehäuse 3 ist ein Sternkörper 4 ortsfest gelagert, der in seiner Mitte eine Führung für einen Schaft 5 eines Ventilkörpers 6 aufnimmt. Der Ventilkörper 6 bildet mit einem eingezogenen Rand 7 des Gehäuses 3 das Steckerventil 6,7. Der Ventilkörper 6 des Steckers 2 ragt in der Schließstellung um den axialen Hub des Ventilkörpers 6 über eine am Gehäuse 3 angeordnete Stirnfläche 8 des Steckers 2 hinaus. Entsprechend bildet der Sternkörper 4 einen Anschlag 9 zur Begrenzung dieses Hubes des Ventilkörpers 6. Zwischen dem Sternkörper 4 und dem Ventilkörper 6 ist eine Schließfeder 10 angeordnet. Das Gehäuse 3 des Steckers 2 besitzt innen und außen die aus Figur 1 ersichtliche Formgebung und weist insbesondere eine umlaufende Verriegelungsnut 11 auf, die in bekannter Weise mit einer Sperrkugelverriegelung der Muffe 1 zusammenarbeitet.

Die Muffe 1 weist ein Gehäuse 12 auf, welches, wie dargestellt, auch mehrteilig ausgebildet sein kann. Außen auf dem Gehäuse 12 ist eine Schiebehülse 13 verschiebbar gelagert. Zwischen Gehäuse 12 und Schiebehülse 13 ist eine Verriegelungsfeder 14 in bekannter Weise eingeschaltet, die hier jedoch so ausgebildet und angeordnet ist, daß sie die Schiebehülse 13 in eine solche Relativlage zu dem Gehäuse 12 kraftmäßig beaufschlagt, in der eine Sperrkugelverriegelung 15 geöffnet ist, sich also in der Freigabestellung befindet. Zu der Sperrkugelverriegelung 15 gehören mehrere über den Umfang abständig verteilte Kugeln 16, die in Bohrungen 17 im Gehäuse 12 käfigartig gelagert sind und die sowohl radial nach innen in die Verriegelungsnut 11 des Steckers 2 in der verriegelten Stellung eintreten können, als auch nach außen in Ausweichnuten 18 und 19, die ebenso wie ein Verriegelungsnocken 20 auf dem inneren Umfang der Schiebehülse 13 ausgebildet und angeordnet sind.

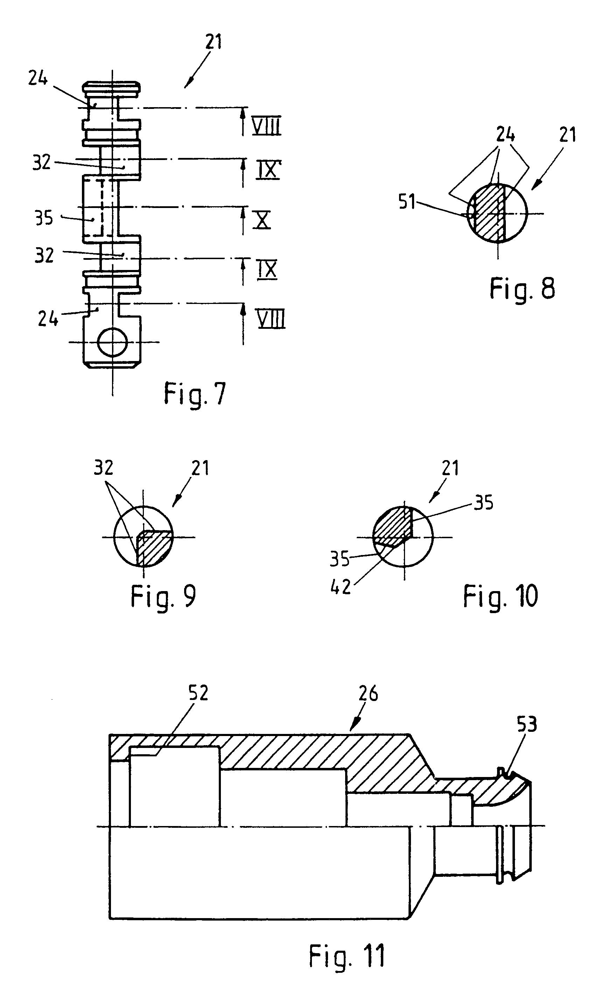

In dem Gehäuse 12 der Muffe 1 ist eine im rechten Winkel zu der Achse der Muffe verdrehbar angeordnete Exzenterwelle 21 vorgesehen, die mit Hilfe von zwei symmetrisch angeordneten Dichtungen 22 dichtend, aber verdrehbar, das Gehäuse 12 durchsetzt. Die Exzenterwelle 21 ist axial gehalten und trägt an ihrem einen, aus dem Gehäuse 12 herausgeführten Ende einen Handhebel 23, um sie in verschiedenen Winkelbereichen gezielt verdrehen zu können. Die Exzenterwelle 21 weist zweckmäßig in symmetrischer Ausführung eine erste Steuerfläche 24, wie sie aus Figur 1 oder auch aus Figur 8 erkennbar ist. Aus Figur 8 wird ersichtlich, daß diese Steuerfläche 24 aus zwei geraden Stücken und einer Kurvenfläche insgesamt bestehen kann. Dieser ersten Steuerfläche 24 an der Exzenterwelle 21 zugeordnet besitzt die Schiebehülse 13 eine Gegenfläche 25, die zweckmäßig an ihrem hinteren, der Exzenterwelle 21 zugekehrten Ende vorgesehen und ausgebildet ist. Die Verriegelungsfeder 14 erfüllt gleichzeitig die Funktion, daß die Gegenfläche 25 in den verschiedenen Stellungen jeweils gegen die erste Steuerfläche 24 gedrückt bzw. gehalten wird. Über die Verdrehung der Exzenterwelle in einem ersten Verdrehwinkelbereich wird allein die Sperrkugelverriegelung 15 betätigt, d.h. aus einer Freigabestellung in eine Verriegelungsstellung überführt bzw. umgekehrt.

In dem Gehäuse 12 der Muffe 1 ist ein Ventilkörper 26 verschiebbar gelagert, der eine vergleichsweise komplizierte Formgebung aufweist und sich mit seinem hinteren Ende bis über die Exzenterwelle 21 hinaus erstreckt. Er weist axiale Schlitze auf, die jedoch in seinem vorderen Bereich nicht durchgehend vorgesehen sind. Im vorderen Bereich ist auf einem Kopf 27 des Ventilkörpers 26 eine Dichtung 28 angeordnet, die mit einem eingezogenen Rand 29 am Gehäuse 12 das Muffenventil 26, 29 bildet. Im Bereich des Randes 29 bildet das Gehäuse 12 eine Stirnfläche 30, die der Stirnfläche 8 des Steckers 2 zugeordnet ist. In bekannter Weise ist zwischen dem Gehäuse 12 der Muffe 1 und dem Gehäuse 3 des Steckers 2 eine Dichtung 31 gelagert, über die die Dichtheit der Kupplung in angekuppeltem Zustand nach außen hergestellt wird.

Die Exzenterwelle 21 trägt eine zweite Steuerfläche 32 für eine ziehende, zwangsweise Betätigung des Ventilkörpers 26 relativ gegenüber dem Gehäuse 12 der Muffe 1. Die Steuerfläche 32 arbeitet mit einer Gegenfläche 33 an dem Ventilkörper 26 zusammen. Es handelt sich um eine Zwangsführung. Aus Montagegründen ist ein Ring 34 von hinten in den Ventilkörper 26 eingekippt eingesetzt, der die Verbindung zwischen der Steuerfläche 32 und dem Ventilkörper 26 in beiden Richtungen sicherstellt. Die Ausbildung der zweiten Steuerfläche 32 ist insbesondere in dem Schnitt gemäß Figur 9 ersichtlich.

Die Exzenterwelle 21 weist auch noch eine dritte Steuerfläche 35 für die Betätigung des Ventilkörpers 6 des Steckers 2 auf. Zu diesem Zweck ist in dem Ventilkörper 26 der Muffe ein Druckstift 36 verschiebbar gelagert, der an seinem der Exzenterwelle 21 zugekehrten Ende eine Gegenfläche 37 aufweist, die mit der dritten Steuerfläche 35 zusammenarbeitet bzw. zusammenwirkt. Der Druckstift 36 weist an seinem hinteren Ende zugleich Fortsätze 38 auf, auf denen das eine Ende einer Schließfeder 39 abgestützt ist, die dem Ventilkörper 26 zugeordnet ist und sich andererseits an diesem auf einem Bund, Vorsprung o. dgl. abstützt. In diesem Bereich besitzt der Ventilkörper 26 auch eine Dichtung 40 für die Abdichtung des Druckstifts 36 gegenüber dem Ventilkörper 26 in allen Relativlagen. Der Druckstift 36 weist im übrigen eine solche axiale Länge auf, daß sein vorderes Ende 41 zur Betätigung des Ventilkörpers 6 des Steckers 2 dient bzw. sich an eine entsprechende Fläche an diesem Ventilkörper 6 anlegt, um das Steckerventil 6, 7 zu öffnen. Die Ausbildung der dritten Steuerfläche 35 ist im einzelnen aus Figur 10 erkennbar. Die Steuerfläche 35 weist einen vorspringenden Nocken 42 auf, um das Steckerventil 6, 7 mit Voreilung gegenüber dem Muffenventil 26, 29 öffnen zu können.

Die Zusammenwirkung der einzelnen Teile ergibt sich in einer Zusammenschau der Figuren 1 bis 4. Dabei zeigt Figur 1 die Relativlage der Teile mit geschlossenem Muffenventil 26, 29 und geschlossenem Steckerventil 6, 7 sowie der Sperrkugelverriegelung 15 in der Freigabestellung. Dies stellt zugleich die Ausgangslage sowie auch die abgekuppelte Stellung der Teile zueinander dar. Somit läßt sich in dieser Stellung, wie Figur 1 zeigt, ein Stecker 2 in die Muffe 1 einführen, und zwar ohne nennenswerte Gegenkraft, lediglich unter Überwindung der Reibung der Dichtung 31. Das Einführen des Steckers 2 in die Muffe 1 ist auch völlig unabhängig davon, ob steckerseitig und/oder muffenseitig ein Restdruck in den Leitungsteilen vorhanden ist oder nicht.

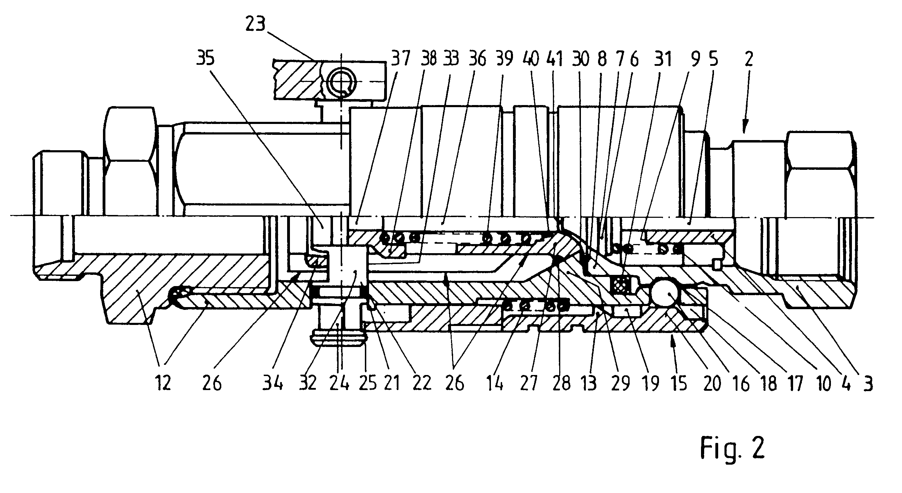

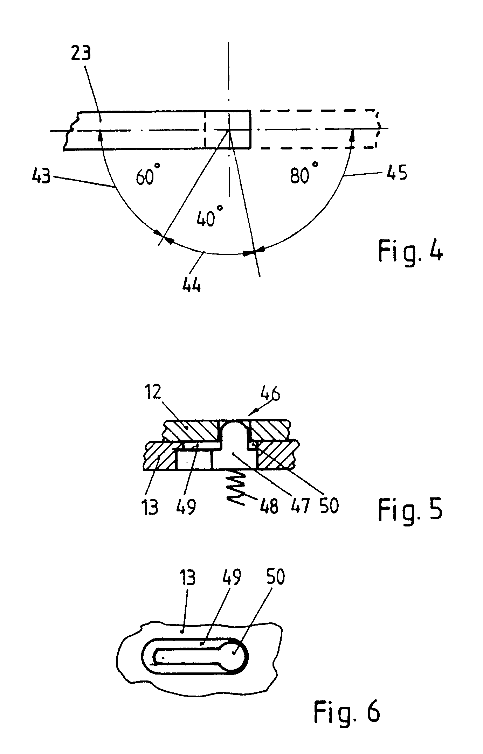

Nach diesem Einführen des Steckers in die Muffe 1 wird der Handhebel 23 in einem ersten Drehwinkelbereich 43 (Figur 4), der beispielsweise etwa 60° betragen kann, verschwenkt, so daß die Kupplungsteile die aus Figur 2 ersichtliche Relativlage annehmen, in welcher die Sperrkugelverriegelung 15 geschlossen ist, also der Stecker 2 axial in der Muffe 1 gesichert bzw. verriegelt ist und andererseits sowohl das Steckerventil 6, 7 wie auch das Muffenventil 26, 29 noch nach wie vor geschlossen sind. Es wird also zuerst einmal die mechanische Verriegelung zwischen Stecker 2 und Muffe 1 herbeigeführt. Dabei wird die Schiebehülse 13 entgegen der Kraft der Verriegelungsfeder 14 so verschoben, daß der Verriegelungsnocken 20 die Kugeln 16 radial nach innen und damit in die Verriegelungsnut 11 des Steckers 2 verschiebt, so daß die Kugeln 16 der Sperrkugelverriegelung 15 in dieser Lage gehalten sind (Figur 2).

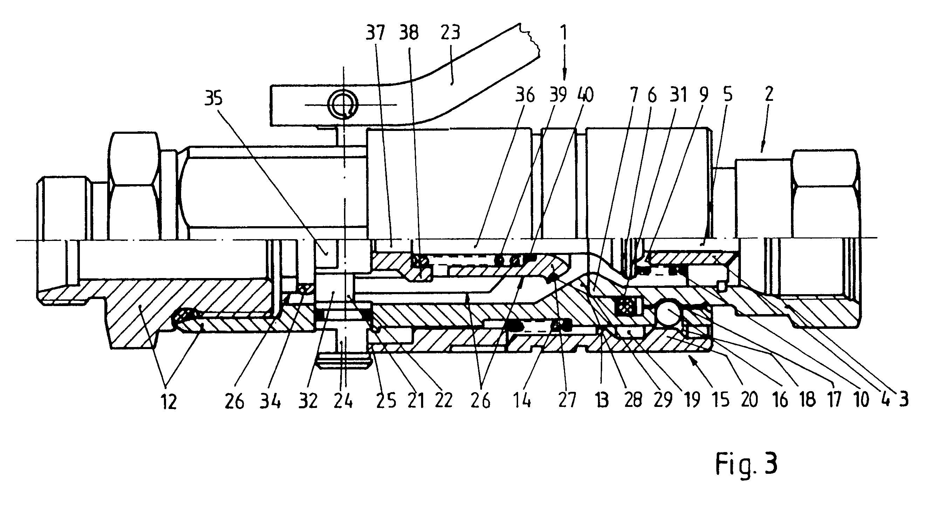

In einem sich entweder direkt oder unter einem geringfügigen Leerhub anschließenden zweiten Drehwinkelbereich 44 (Figur 4), der beispielsweise etwa 40° betragen kann, wird die voreilende Öffnung des Steckerventils 6, 7 durchgeführt, während das Muffenventil 26, 29 noch weiterhin geschlossen bleibt. Zum Zwecke dieser Voreilung tritt der Nocken 42 (Figur 10) in Wirkverbindung mit der Gegenfläche 37 und bewirkt ein voreilendes Axialverschieben des Druckstifts 36 und somit ein Öffnen des Steckerventils 6, 7 gegen die Kraft der Schließfeder 10. Es versteht sich, daß zum Öffnen des Steckerventils 6, 7 nur ein vergleichsweise kleiner voreilender Hub erforderlich ist, weshalb der Nocken 42 auch nur verhältnismäßig gering aus der dritten Steuerfläche 35 hervorragen muß. Es ist zu beachten, daß damit zwar das Steckerventil 6, 7 geöffnet ist, der Ventilkörper 6 jedoch noch nicht seinen vollen Hub bis zum Anschlag 9 ausgeführt hat. Dieser Resthub des Ventilkörpers 6 wird in einem dritten Drehwinkelbereich 45, der beispielsweise etwa 80° betragen kann (Figur 4) erzielt. In diesem dritten Drehwinkelbereich erfolgt auch das Öffnen des Muffenventils 26, 29, so daß am Ende des Drehwinkelbereichs 45 die Teile die in Figur 3 dargestellte Relativlage einnehmen. Der Handhebel 23 ist gegenüber der Ausgangslage in Figur 1 um 180° verdreht. Die Sperrkugelverriegelung 15 bleibt über die Drehwinkelbereiche 44 und 45 nach wie vor geschlossen und sowohl das Steckerventil 6, 7 wie auch das Muffenventil 26, 29 sind in die Öffnungsstellung überführt (Figur 3), wobei sowohl der Ventilkörper 6 des Steckers 2 auf oder in der Nähe seines Anschlags 9 mechanisch blockiert ist. Ebenso ist auch der Ventilkörper 26 an der Exzenterwelle 21 in der Offenstellung mechanisch blockiert, so daß auf diese Art und Weise eine Rückströmsicherung erzielt wird, d.h. auch Rückströmungen können nicht zu einem Zuschlagen des Steckerventils 6, 7 und/oder des Muffenventils 26, 29 führen.

Man erkennt, daß sowohl die Betätigung der Sperrkugelverriegelung 15 wie auch der Ventilkörper 6 sowie 26 durch Zwangssteuerung über die Exzenterwelle 21 und die entsprechende Betätigung des Handhebels 23 erfolgen, so daß diese Betätigung völlig unabhängig davon durchführbar ist, ob steckerseitig und/oder muffenseitig ein Restdruck vorhanden oder eingeschlossen ist. Durch die gegenläufige Betätigung des Steckerventils 6, 7 einerseits und des Muffenventils 26, 29 andererseits ist es beim Öffnungsvorgang der Ventile nicht mehr erforderlich, ein Volumen zwischen den beiden Ventilen zunächst zu komprimieren, um die Öffnungsbewegung durchführen zu können.

Die Trennung der Schnellverschlußkupplung erfolgt in umgekehrter Reihenfolge, indem die Drehwinkelbereiche 45, 44, 43 rückwärts durchlaufen werden. Hier wird also zunächst das Muffenventil 26, 29 geschlossen. Nachfolgend schließt das Steckerventil 6, 7 und schließlich gibt die Sperrkugelverriegelung 15 den Stecker 2 frei, so daß er aus der Muffe 1 herausgezogen werden kann. Man erkennt anhand der Darstellung in Figur 1, daß das zwischen den Ventilkörpern 6 und 26 eingeschlossene Restvolumen durch die angepaßte Formgebung sehr klein gehalten ist, so daß eine äußerst niedrige Lecköltrate resultiert. Dieser Vorteil ergibt sich aber nicht nur infolge der formmäßigen Anpassung, sondern vor allen Dingen aufgrund der Tatsache, daß auch das Muffenventil 26, 29 relativ nahe am vorderen Ende der Muffe, also im Bereich der Stirnfläche 30 und nicht etwa zurückversetzt hinter die Exzenterwelle 21 vorgesehen ist.

Es können entsprechende Maßnahmen vorgesehen sein, um lediglich ein Vorwärts- und Rückwärtsverschwenken des Handhebels 23 über den gesamten Drehwinkelbereich von 180° sicherzustellen, damit die Bedienungssicherheit erhöht wird. Es wäre aber auch möglich, beispielsweise durch kompliziertere Gestaltung der Steuerflächen der Exzenterwelle, die Betätigungsrichtung freizugeben, so daß sich beispielsweise zwei Gesamtverdrehwinkelbereiche von 180° ergänzen. In diesem Fall wäre es dann gleichgültig, ob der Handhebel 23 im linken oder im rechten Verschwenksinne betätigt würde.

Um sicherzustellen, daß der Handhebel 23 nur dann verschwenkt werden kann, wenn auch ein Stecker 2 eingeschoben ist, kann die in Figur 5 verdeutlichte Sicherung 46 im Bereich der Kugeln 16 bzw. anstelle einer Kugel 16 auf dem Umfang zwischen Gehäuse 12 und Schiebehülse 13 vorgesehen sein. Die Sicherung 46 weist einen Sperrstift 47 auf, der gegen den Druck einer Feder 48 radial verschiebbar in dem Gehäuse 12 der Muffe 1 gelagert ist. Bei nicht eingeschobenem Stecker 2 drückt die Feder 48 den Sperrstift 47 in eine Verriegelungsstellung, in der die axiale Verschiebbarkeit der Schiebehülse 13 gegenüber dem Gehäuse 12 blockiert ist, so daß umgekehrt über die Gegenfläche 25 und die erste Steuerfläche 24 auch die Verschwenkbarkeit der Exzenterwelle 21 blockiert ist. Das radial nach innen gerichtete Ende des Sperrstifts 47 ragt in den Verschiebeweg des Gehäuses 3 des Steckers 2 ein, so daß das Einschieben des Steckers 2 dazu führt, daß der Sperrstift 47 in entgegengesetzter Richtung der Kraft der Feder 48 radial nach außen verschoben wird. Diese Relativlage ist in Figur 5 dargestellt. Der Sperrstift 47 ist dann über eine in Figur 6 in Draufsicht dargestellte Nut 49 mit einem an ihm gebildeten Absatz so hinausgeschoben, daß bei einer Relativbewegung zwischen Schiebehülse 13 und Gehäuse 12 der Sperrstift 47 auf dieser Nut 49 geführt und gehalten ist, so daß er die Relativbewegung zwischen Schiebehülse 13 und Gehäuse 12 nicht behindert. Erst nach dem Herausziehen des Gehäuses 3 des Steckers 2 aus der Muffe 1 fällt der Sperrstift 47 durch eine an die Nut 49 anschließende Aussparung 50 radial nach innen infolge des Drucks der Feder 8 ein, so daß die axiale Verschiebbarkeit wieder blockiert ist. Auf diese Art und Weise wird die Möglichkeit ausgeschaltet, das Muffenventil 26, 29 ohne einen eingeschobenen Stecker 2 öffnen zu können, so daß auch Ölverluste in die Atmosphäre infolge Fehlbedienung verhindert sind.

Die Figuren 7 bis 10 verdeutlichen die Ausbildung der Exzenterwelle 21 im einzelnen und die relative Anordnung der Steuerflächen 24, 32 und 35 zueinander. Gemäß Figur 8 ist auch erkennbar, daß die Steuerfläche 24 eine Fläche 51 umschließt, die der um 180° verschwenkten Stellung des Handhebels 23 (Figur 3) zugeordnet ist, so daß mit Hilfe der Verriegelungsfeder 14 eine kleine Kraftschwelle gebildet ist, die erst bei Aufhebung der Verriegelungs- bzw. Kupplungsstellung überwunden werden muß.

Figur 11 zeigt den Ventilkörper 26 des Muffenventils 26, 29 in einem Zwischenschritt seiner Herstellung, nämlich als Drehteil. Zu seiner vollständigen Herstellung müssen von seinem hinteren Ende her noch axiale Nuten gefräst werden, die jedoch nicht bis zum vorderen Ende durchgehen, wie dies aus Figur 1 erkennbar ist. Immerhin läßt aber die Darstellung der Figur 11 einen Absatz 52 erkennen, hinter welchem letztendlich der Ring 34 bei der Montage der Muffe eingeführt und verankert wird. Eine Nut 53 dient zur Aufnahme der Dichtung 28.

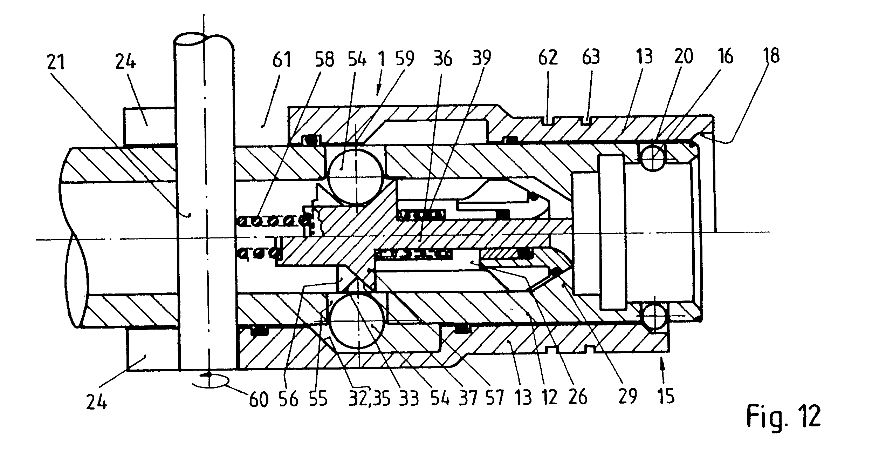

In Figur 12 ist eine zweite Ausführungsmöglichkeit der Schnellverschlußkupplung dargestellt. Die beiden Halbschnitte zeigen verschiedene Relativlagen. Der untere Halbschnitt zeigt die Ausgangsstellung, die mit der Darstellung gemäß Figur 1 vergleichbar ist, also mit geöffnetem Kugelgesperre 15 und geschlossenem Muffenventil 26, 29. Der obere Halbschnitt zeigt die gekuppelte Stellung, die gemäß Figur 3 verdeutlicht ist.

An der Exzenterwelle 21 ist hier unmittelbar nur die erste Steuerfläche 24 vorgesehen, während von dieser abgeleitet die zweite und dritte Steuerfläche 32 und 35 in einer Schrägfläche an der Schiebehülse 13 realisiert sind. Zur Übertragung der Steuerkräfte sind Kugeln 54 in Durchbrüchen 55 im Gehäuse 12 gelagert. Der Ventilkörper 26 trägt an einem konischen Fortsatz 56 die Gegenfläche 33, während ein ähnlicher Fortsatz 57 an dem Druckstift 36 die Gegenfläche 37 aufweist. Zwischen den Druckstift 36 und den Ventilkörper 26 ist dann auch hier die Schließfeder 39 eingeschaltet. Die Anordnung kann durch eine weitere Feder 58 an der Exzenterwelle 21 in einer Ausgangslage abgestützt sein, so daß diese Ausgangslage insoweit gesichert ist, daß die Gegenflächen 33 und 37 der Kugel 54 gegenüberstehen (Figur 12). Es ist erkennbar, daß auch hier bei einer Betätigung der Exzenterwelle 21 zunächst die Sperrkugelverriegelung 15 allein aus der Freigabe- in die Verriegelungsstellung hinein überführt wird, bis schließlich die gemeinsamen Steuerflächen 32 und 35 auf den Kugeln 54 zur Anlage kommen und diese aus der in Figur 12 unten dargestellten Stellung radial nach innen in die in Figur 12 oben dargestellte Stellung verschieben. Dabei wandert der Druckstift 36 im Öffnungssinne für ein Steckerventil 6, 7 nach rechts bzw. nach außen, während der Ventilkörper 26 zurückgezogen wird, ebenfalls im Öffnungssinne eines Muffenventils 26, 29. Durch geringfügige kugelförmige Einbuchtungen 59 bzw. eine umlaufende Rille am inneren Umfang der Schiebehülse 13 kann diese gekuppelte Stellung gesichert sein. Es verdient Beachtung, daß bei dem Ausführungsbeispiel der Figur 12 die Verriegelungsfeder 14 fehlt. Um die Schnellverschlußkupplung abreißfähig zu machen, ist eine Torsionsfeder 60, die nur schematisch dargestellt ist, vorgesehen. Die Torsionsfeder 60 wirkt auf die Exzenterwelle 21 im Rückdrehsinne ein, so daß nach beendetem Kupplungsvorgang und dem Loslassen des Handhebels 23 die Exzenterwelle 21 wiederum in ihre Ausgangslage verschwenkt wird, andererseits aber die Schiebehülse 13 in der Kuppelstellung verbleibt, so daß zwischen der Verschiebehülse 13 und der Exzenterwelle 21 ein Freiraum 61 entsteht. Wird dann noch die Kupplung an der Schiebehülse 13 mit Hilfe zweier Nuten 62 und 63 z.B. in einer Schottwandung ortsfest gelagert, dann ist diese Schnellverschlußkupplung auch abreißfähig. Wie man sieht, kann durch Zugausübung an einem gekuppelten Stecker das Gehäuse 12 relativ aus der Schiebehülse 13 herausgezogen werden, wobei der Freiraum 61 aufgebraucht wird.Dabei schließen zunächst das Steckerventil 6, 7 und das Muffenventil 26, 29. Erst anschließend erfolgt das Öffnen der Sperrkugelverriegelung 15. Durch bewußtes Ziehen an der mit dem Stecker 2 verbundenen Leitung findet hier auch der normale Entkuppelvorgang statt.

Bezugszeichenliste

| | | |
|---|---|---|
| 1 | = | Muffe |
| 2 | = | Stecker |
| 3 | = | Gehäuse |
| 4 | = | Sternkörper |
| 5 | = | Schaft |
| 6 | = | Ventilkörper |
| 7 | = | Rand |
| 8 | = | Stirnfläche |
| 9 | = | Anschlag |
| 10 | = | Schließfeder |
| 11 | = | Verriegelungsnut |
| 12 | = | Gehäuse |
| 13 | = | Schiebehülse |
| 14 | = | Verriegelungsfeder |
| 15 | = | Sperrkugelverriegelung |
| 16 | = | Kugel |
| 17 | = | Bohrung |
| 18 | = | Ausweichnut |
| 19 | = | Ausweichnut |
| 20 | = | Verriegelungsnocken |
| 21 | = | Exzenterwelle |
| 22 | = | Dichtung |
| 23 | = | Handhebel |
| 24 | = | erste Steuerfläche |
| 25 | = | Gegenfläche |
| 26 | = | Ventilkörper |
| 27 | = | Kopf |
| 28 | = | Dichtung |
| 29 | = | Rand |
| 30 | = | Stirnfläche |
| 31 | = | Dichtung |
| 32 | = | zweite Steuerfläche |
| 33 | = | Gegenfläche |
| 34 | = | Ring |
| 35 | = | dritte Steuerfläche |
| 36 | = | Druckstift |
| 37 | = | Gegenfläche |
| 38 | = | Fortsätze |
| 39 | = | Schließfeder |
| 40 | = | Dichtung |
| 41 | = | Ende |
| 42 | = | Nocken |
| 43 | = | Drehwinkelbereich |
| 44 | = | Drehwinkelbereich |
| 45 | = | Drehwinkelbereich |
| 46 | = | Sicherung |
| 47 | = | Sperrstift |
| 48 | = | Feder |
| 49 | = | Nut |
| 50 | = | Aussparung |
| 51 | = | Fläche |
| 52 | = | Absatz |
| 53 | = | Nut |
| 54 | = | Kugel |
| 55 | = | Durchbruch |
| 56 | = | Fortsatz |
| 57 | = | Fortsatz |
| 58 | = | Feder |
| 59 | = | Einbuchtung |
| 60 | = | Torsionsfeder |
| 61 | = | Freiraum |
| 62 | = | Nut |
| 63 | = | Nut |

Ansprüche

1. Schnellverschlußkupplung für insbesondere Hydraulikleitungen, bestehend aus zwei ineinandersteckbaren und in der gekuppelten Stellung über eine Sperrkugelverriegelung mit axial verschiebbarer Schiebehülse verriegelbaren Kupplungshälften in Form einer die Schiebehülse tragenden Muffe und eines Steckers, mit einem Muffenventil und einem Steckerventil, deren jeweiliger Ventilkörper durch eine Schließfeder in Schließrichtung beaufschlagt ist, und mit einer im Gehäuse der Muffe gelagerten, über einen Handhebel verdrehbaren Exzenterwelle, die eine erste Steuerfläche (24) zur zwangsweisen Betätigung der Sperrkugelverriegelung aus einer anfänglichen Freigabestellung heraus in eine Verriegelungsstellung hinein aufweist, dadurch gekennzeichnet, daß die Muffe (1) an der Exzenterwelle (21) eine zweite Steuerfläche (32) zur zwangsweisen Betätigung und Blockierung der axialen Beweglichkeit des Ventilkörpers (26) des Muffenventils (26, 29) in der Offenstellung sowie eine dritte Steuerfläche (35) zur zwangsweisen Betätigung und Blockierung der axialen Beweglichkeit des Ventilkörpers (6) des Steckerventils (6, 7) in der Offenstellung aufweist, und daß das Muffenventil (26, 29) als einziges Absperrventil für die Muffe im vorderen Endbereich der Muffe (1) und die Exzenterwelle (21) auf der dem vorderen Endbereich der Muffe (1) abgekehrten Seite des Ventilkörpers (26) angeordnet sind.

2. Schnellverschlußkupplung nach Anspruch 1, dadurch gekennzeichnet, daß die dritte Steuerfläche (35) relativ zur zweiten Steuerfläche (32) so ausgebildet und angeordnet ist, daß bei Betätigung der Ventilkörper (6) des Steckerventils (6, 7) mit Voreilung gegenüber dem Ventilkörper (26) des Muffenventils (26, 29) öffnet.

3. Schnellverschlubkupplung nach Anspruch 1 oder 2, dadurch gekennzeichnet, daß zum Öffnen des Steckerventils (6, 7) unter Anwendung einer geringen Betätigungskraft die dritte Steuerfläche (35) einen vorstehenden Nocken (42) aufweist, der in kleinem Abstand zu der Drehachse der Exzenterwelle (21) angeordnet ist.

4. Schnellverschlubkupplung nach einem der Ansprüche 1 bis 3, dadurch gekennzeichnet, daß der Ventilkörper (26) des Muffenventils (26, 29) axial geschlitzt und radial gebohrt ausgebildet und von der Exzenterwelle (21) durchsetzt ist, und daß der Ventilkörper (26) des Muffenventils eine mit der zweiten Steuerfläche (32) zusammenwirkende zweite Gegenfläche (33) zur ziehenden Betätigung des Ventilkörpers (26) des Muffenventils (26, 29) aufweist.

5. Schnellverschlußkupplung nach einem der Ansprüche 1 bis 4, dadurch gekennzeichnet, daß in dem hohl ausgebildeten Ventilkörper (26) des Muffenventils ein Druckstift (36) unter Abdichtwirkung verschiebbar gelagert ist, der zur Übertragung einer Druckkraft auf den Ventilkörper (6) des Steckerventils (6, 7) ausgebildet ist und an seinem der Exzenterwelle (21) zugekehrten Ende eine mit der dritten Steuerfläche (35) zusammenwirkende dritte Gegenfläche (37) aufweist.

6. Schnellverschlußkupplung nach Anspruch 5, dadurch gekennzeichnet, daß zwischen dem Ventilkörper (26) des Muffenventils (26, 29) und dem Druckstift (36) die Schließfeder (39) des Muffenventils angeordnet ist.

7. Schnellverschlußkupplung nach einem der Ansprüche 1 bis 5, dadurch gekennzeichnet, daß die drei Steuerflächen (24, 32, 35) auf der Exzenterwelle (21) über Drehwinkelbereiche (43, 44, 45) so versetzt gegeneinander angeordnet sind, daß bei einer Verdrehung der Exzenterwelle (21) aus der Freigabe- in die Verriegelungsstellung in einem ersten Verdrehbereich (43) zunächst nur die Sperrkugelverriegelung (15) verriegelt und in einem weiteren Verdrehbereich (44, 45) der Ventilkörper (6) des Steckerventils und der Ventilkörper (26) des Muffenventils geöffnet und blockiert werden.

8. Schnellverschlußkupplung für insbesondere Hydraulikleitungen, besteht aus zwei ineinandersteckbaren und in der gekuppelten Stellung über eine Sperrkugelverriegelung mit axial verschiebbarer Schiebehülse verriegelbaren Kupplungshälften in Form einer die Schiebehülse tragenden Muffe und eines Steckers, mit einem Muffenventil und einem Steckerventil, deren jeweiliger Ventilkörper durch eine Schließfeder in Schließrichtung beaufschlagt ist, und mit einer am Gehäuse der Muffe gelagerten, über eine Handhebel verdrehbaren Exzenterwelle, die eine erste Steuerfläche (24) zur zwangsweisen Betätigung der Sperrkugelverriegelung aus einer anfänglichen Freigabestellung heraus in eine Verriegelungsstellung hinein aufweist, dadurch gekennzeichnet, daß die Muffe (1) an der Schiebehülse (13) eine zweite Steuerfläche (32) zur zwangsweisen Betätigung und Blockierung der axialen Beweglichkeit des Ventilkörpers (26) des Muffenventils (26, 29) in der Offenstellung sowie eine dritte Steuerfläche (35) zur zwangsweise Betätigung und Blockierung der axialen Beweglichkeit des Ventilkörpers (6) des Steckerventils (6, 7) in der Offenstellung aufweist, und daß am Gehäuse (12) der Muffe (1) radial bewegbare Kugeln (54) vorgesehen sind, die mit einer zweiten Gegenfläche (33) zur ziehenden Betätigung des Ventilkörpers (26) des Muffenventils (26, 29) und einer dritten Gegenfläche (37) zum Verschieben eines den Ventilkörper (6) des Steckerventils (6, 7) öffnenden Druckstifts (36) zusammenwirken (Figur 12).

9. Schnellverschlußkupplung nach Anspruch 8, dadurch gekennzeichnet, daß für die selbsttätige Rückführung der Exzenterwelle (21) in die Freigabestellung eine Feder, insbesondere Drehfeder (60), vorgesehen ist, und daß die Schiebehülse (13) ohne Verriegelungsfeder unter Selbsthemmung an der Muffe (1) gelagert ist.

10. Schnellverschlußkupplung nach einem der Ansprüche 1 bis 9, dadurch gekennzeichnet, daß die Schiebehülse (13) mit einer ihre Verschiebbarkeit blockierenden Sicherung (46) versehen ist, die erst beim Einführen des Steckers (2) aufgehoben wird.

## Claims

1. Quick-acting coupling, especially for hydraulic conduits, consisting of two coupling halves, which can be plugged together and locked in the coupled position via a ball lock having an axially displaceable sliding sleeve, in the form of a bush bearing the sliding sleeve and a connector, having a bush valve and a connector valve, the valve body of each of which is loaded by a closure spring in the closure direction, and having an eccentric shaft which is mounted in the housing of the bush, can be rotated via a hand lever and has a first control surface for forced actuation of the ball lock from an initial release position into a locked position, characterised in that the bush (1) has on the eccentric shaft (21) a second control surface (32) for forced actuation and blocking of the axial mobility of the valve body (26) of the bush valve (26, 29) in the open position and a third control surface (35) for forced actuation and blocking of the axial mobility of the valve body (6) of the connector valve (6, 7) in the open position, and in that the bush valve (26, 29), as the single shutoff valve for the bush in the front end region of the bush (1), and the eccentric shaft (21) are arranged on the side of the valve body (26) facing away from the front end region of the bush (1).

2. Quick-acting coupling according to Claim 1, characterised in that the third control surface (35) is constructed and arranged in such a way relative to the second control surface (32) that, when it is actuated, the valve body (6) of the connector valve (6, 7) opens in advance of the valve body (26) of the bush valve (26, 29).

3. Quick-acting coupling according to Claim 1 or 2, characterised in that, for opening the connector valve (6, 7) using a small actuation force, the third control surface (35) has a projecting cam (42) which is arranged at a short distance from the axis of rotation of the eccentric shaft (21).

4. Quick-acting coupling according to one of Claims 1 to 3, characterised in that the valve body (26) of the bush valve (26, 29) is of axially slotted and radially bored construction and is penetrated by the eccentric shaft (21), and in that the valve body (26) of the bush valve has a second countersurface (33), interacting with the second control surface (32), for pulling actuation of the valve body (26) of the bush valve (26, 29).

5. Quick-acting coupling according to one of Claims 1 to 4, characterised in that a pressure pin (36) is mounted so as to be displaceable with a sealing-off effect in the hollow valve body (26) of the bush valve, which pressure pin is constructed for transmitting a pressure force onto the valve body (6) of the connector valve (6, 7), and has at its end facing the eccentric shaft (21) a third countersurface (37) interacting with the third control surface (35).

6. Quick-acting coupling according to Claim 5, characterised in that the closure spring (39) of the bush valve is arranged between the valve body (26) of the bush valve (26, 29) and the pressure pin (36).

7. Quick-acting coupling according to one of Claims 1 to 5, characterised in that the three control surfaces (24, 32, 35) are arranged on the eccentric shaft (21) so as to be mutually offset over ranges (43, 44, 45) of rotation angles in such a way that, when the eccentric shaft (21) is rotated from the release position into the locked position, in a first range (43) of rotation firstly only the ball lock (15) is locked and, in a further range (44, 45) of rotation, the valve body (6) of the connector valve and the valve body (26) of the bush valve are opened and blocked.

8. Quick-acting coupling, especially for hydraulic conduits, consisting of two coupling halves, which can be plugged together and locked in the coupled position via a ball lock having an axially displaceable sliding sleeve, in the form of a bush bearing the sliding sleeve and a connector, having a bush valve and a connector valve, the valve body of each of which is loaded by a closure spring in the closure direction, and having an eccentric shaft which is mounted in the housing of the bush, can be rotated via a hand lever and has a first control surface (24) for forced actuation of the ball lock from an initial release position into a locked position, characterised in that the bush (1) has on the sliding sleeve (13) a second control surface (32) for forced actuation and blocking of the axial mobility of the valve body (26) of the bush valve (26, 29) in the open position and a third control surface (35) for forced actuation and blocking of the axial mobility of the valve body (6) of the connector valve (6, 7) in the open position, and in that there are provided on the housing (12) of the bush (1) radially movable balls (54) which interact with a second countersurface (33) for pulling actuation of the valve body (26) of the bush valve (26, 29) and with a third countersurface (37) for displacing a pressure pin (36) opening the valve body (6) of the connector valve (6, 7) (Figure 12).

9. Quick-acting coupling according to Claim 8, characterised in that a spring, in particular a torsion spring (60), is provided for self-acting return of the eccentric shaft (21) into the release position, and in that the sliding sleeve (13) is mounted in a self-locking manner on the bush (1) without a locking spring.

10. Quick-acting coupling according to one of Claims 1 to 9, characterised in that the sliding sleeve (13) is fitted with a safeguard (46) blocking its displaceability, which safeguard is only cancelled when the connector (2) is inserted.

## Revendications

1. Raccord rapide, en particulier pour conduites hydrauliques, se composant de deux moitiés de raccord s'emboîtant l'une dans l'autre et verrouillables dans leur position couplée au moyen d'un verrouillage à billes avec douille coulissante à coulissement axial, sous la forme d'un manchon portant la douille coulissante et d'une fiche mâle, avec une soupape de manchon et une soupape de fiche, chacun des clapets de ces soupapes étant sollicité par un ressort de fermeture dans le sens de fermeture, et avec un arbre excentrique monté dans le boîtier du manchon et entraîné en rotation au moyen d'un levier manuel, cet arbre présentant une première surface de commande pour actionner positivement le verrouillage à billes à partir d'une position initiale de dégagement jusqu'en une position de verrouillage,

**caractérisé** en ce que le manchon (1) présente sur l'arbre excentrique (21) une deuxième surface de commande (32) pour actionner positivement et pour bloquer le mouvement axial du clapet (26) de la soupape à manchon (26, 29) en position ouverte, ainsi qu'une troisième surface de commande (35) pour actionner positivement et pour bloquer le mouvement axial du clapet (6) de la soupape (6, 7) de la fiche mâle en position ouverte, et en ce que la soupape (26, 29) du manchon est disposée, en tant qu'unique soupape de retenue pour le manchon, dans la région de l'extrémité antérieure du manchon (1), et en ce que l'arbre excentrique (21) est disposé sur le côté du clapet (26) opposé à la région de l'extrémité antérieure du manchon (1).

2. Raccord rapide selon la revendication 1, caractérisé en ce que la troisième surface de commande (35) est conformée et disposée, par rapport à la deuxième surface de commande (32), de telle manière que lors de l'actionnement le clapet (6) de la soupape (6, 7) de la fiche mâle s'ouvre avant le clapet (26) de la soupape (26, 29) du manchon.

3. Raccord rapide selon la revendication 1 ou 2, caractérisé en ce que, pour ouvrir la soupape (6, 7) de la fiche en utilisant une force d'actionnement petite, la troisième surface de commande (35) présente une came saillante (42) qui est disposée à faible distance de l'axe de rotation de l'arbre excentrique (21).

4. Raccord rapide selon une des revendications 1 à 3, caractérisé en ce que le clapet (26) de la soupape (26, 29) du manchon est fendu axialement et perforé radialement et est traversé par l'arbre excentrique (21) et en ce que le clapet (26) de la soupape du manchon présente une deuxième surface antagoniste (33) coopérant avec la deuxième surface de commande (32) pour actionner par traction le clapet (26) de la soupape (26, 29) du manchon.

5. Raccord rapide selon une des revendications 1 à 4, caractérisé en ce qu'un poussoir (36) est monté coulissant, avec un joint étanche, dans le clapet (26) de la soupape du manchon, ce clapet étant de forme creuse, ce poussoir (36) étant conformé pour transmettre une poussée au clapet (6) de la soupape (6, 7) de la fiche et présentant, sur son extrémité dirigée vers l'arbre excentrique (21), une troisième surface antagoniste (37) coopérant avec la troisième surface de commande (35).

6. Raccord rapide selon la revendication 5, caractérisé en ce que le ressort de fermeture (39) de la soupape du manchon est disposé entre le clapet (26) de la soupape (26, 29) du manchon et le poussoir (36).

7. Raccord rapide selon une des revendications 1 à 5, caractérisé en ce que les trois surfaces de commande (24, 32, 35) sont disposées sur l'arbre excentrique (21) en étant décalées, l'une par rapport à l'autre, selon des angles de rotation (43, 44, 45) de telle manière que, lors d'une rotation de l'arbre excentrique (21) à partir de la position de dégagement jusqu'en position de verrouillage au cours d'une première phase de rotation (43), il se produit d'abord seulement le verrouillage du verrouillage à billes (15), et dans une zone ultérieure de rotation (44, 45), le clapet (6) de la soupape de la fiche et le clapet (26) de la soupape du manchon s'ouvrent et sont bloqués.

8. Raccord rapide, en particulier pour conduites hydrauliques, se composant de deux moities de raccord emboîtables l'une dans l'autre et pouvant être verrouillées en position couplée au moyen d'un verrouillage à billes avec douille coulissante coulissant axialement, sous la forme d'un manchon portant la douille coulissante et d'une fiche mâle, avec une soupape de manchon et une soupape de fiche, dont les clapets sont chacun sollicités dans le sens de fermeture par un ressort de fermeture, et avec un arbre excentrique monté dans le boîtier du manchon et pouvant être entraîne en rotation au moyen d'un levier manuel, cet arbre presentant une première surface de commande (24) pour actionner positivement le verrouillage à billes à partir d'une position initiale de libération jusqu'en une position de verrouillage, **caractérisé** en ce que le manchon (1) présente sur la douille coulissante (13) une deuxième surface de commande (32) pour actionner positivement, par contrainte, et pour bloquer le mouvement axial du clapet (26) de la soupape à manchon (26, 29) en position ouverte, ainsi qu'une troisième surface de commande (35) pour actionner positivement et pour bloquer le mouvement axial du clapet (6) de la soupape (6, 7) de la fiche en position ouverte, et en ce que des billes (54) mobiles radialement sont prévues dans le boîtier (12) du manchon (1), ces billes coopérant avec une deuxième surface antagoniste (33) pour actionner par traction le clapet (26) de la soupape (26, 29) du manchon et avec une troisième surface antagoniste (37) pour faire coulisser un poussoir (36) qui ouvre le clapet (6) de la soupape (6, 7) de la fiche (Figure 12).

9. Raccord rapide selon la revendication 8, caractérisé en ce qu'il est prévu un ressort, en particulier un ressort de torsion (60), pour le rappel automatique de l'abre excentrique (21) en position de libération, et en ce que la douille coulissante (13) est montée auto-bloquante sur le manchon (1) sans ressort de verrouillage.

10. Raccord rapide selon une des revendications 1 à 9, caractérisé en ce que la douille coulissante (13) est munie d'une sûreté (46) qui bloque son coulissement, et qui n'est dégagée que par l'insertion de la fiche (2).

Fig.1

Fig. 2

Fig. 3

Fig. 4

Fig. 5

Fig. 6

Fig. 7

Fig. 8

Fig. 9

Fig. 10

Fig. 11

Fig. 12

EP 0 278 420 B1